# EUROPEAN PATENT SPECIFICATION

(11) **EP 3 112 039 B1**
(45) Date of publication and mention of the grant of the patent: **28.10.2020**
(21) Application number: 16177423.7
(22) Date of filing: 17.02.2010
(51) Int. Cl.: B09B 3/00, B01D 29/25, B30B 9/06, C02F 11/12

(54) **MACHINE AND METHOD FOR PROCESSING THE ORGANIC FRACTION OF URBAN SOLID WASTE**
VORRICHTUNG UND VERFAHREN ZUR VERARBEITUNG DES ORGANISCHEN TEILS URBANER FESTABFÄLLE
MACHINE ET PROCÉDÉ DE TRAITEMENT DE LA FRACTION ORGANIQUE DE DÉCHETS SOLIDES URBAINS

(30) Priority: 26.02.2009 IT TO20090140
(43) Date of publication of application: 04.01.2017
(62) Divisional of application: 10705292.0
(73) Proprietor: DB Technologies BV, 7575 EP Oldenzaal (NL)
(72) Inventor: Gonella, Carlo, 15078 Roccagrimalda (IT)
(74) Representative: BSB Patentanwälte Schütte & Engelen Partnerschaft mbB

(56) References cited:
- EP-A- 1 273 393
- EP-A1- 0 494 561
- DE-U1- 8 103 406
- FR-A1- 2 510 474
- US-A- 3 491 682
- US-A- 3 858 504
- US-A- 4 343 233

## Description

The present invention relates to a machine for processing the organic fraction of urban solid waste (USW) deriving from differentiated collection, hereinafter referred to as organic fraction.

As known, with the practice of the differentiated collection the organic fraction of urban solid waste is separated from the remaining, substantially inert fractions. The organic fraction in turn contains a "humid" fraction, which can be recycled, e.g., for production of fertilizers, and a "dry" fraction, i.e., a fraction having a low percentage of water, which can be recycled, e.g., for production of fuel.

EP 1 207 040 describes a machine which compacts urban solid waste by separating the humid fraction from the dry fraction. This machine comprises three perforated cylinders supported on a revolving drum. The drum is driven to rotate by steps, so that each cylinder is cyclically conveyed in front of a loading station, where it receives the material to be compacted from a hopper via an auger, then in front of a compacting station, where a plunger enters the cylinder and squeezes the material contained therein, thereby causing the fluid fraction to be drained through the holes, and finally in front of an unloading station, where a piston pushes the compacted material away from the cylinder.

Since complications rise from processing a very unhomogeneous material such as the USW, which can also contain rigid bodies having a huge size and made of very resistant materials, such as metal, wood, and the like, the machines according to the above-mentioned patent are designed and sized in such a way that they can stand very high pressures and resist to the high abrasive action exerted by the material. However, this circumstance considerably increases the manufacturing costs of the machine, the use of which, consequently, is not advantageous when only the organic fraction of urban solid waste (FORSU), which is by nature a more homogeneous and yielding material, has to be processed.

Other known machines for compacting material comprising a solid fraction and a liquid fraction are e.g. described in EP 0 494 561 A1, FR 2 510 474 A1, US 4 343 233 A and DE 81 03406 U1.

Therefore, it is a main object of the present invention to provide a machine designed and optimized for processing only the organic fraction of urban solid waste by separating the "humid" fraction from the "dry" fraction.

The above object and other advantages, which will better appear from the following description, are achieved by a machine having the features recited in claim 1, while the dependent claims state other advantageous, though secondary features of the invention.

The invention will now be described in more detail with reference to a few preferred, non-exclusive embodiments, shown by way of non-limiting example in the attached drawings, wherein:
Fig. 1 is a plan view of a machine according to the invention;
Fig. 2 is a view in longitudinal cross-section of the machine of Fig. 1 ;
Figs. 3 to 8 are views similar to Fig. 2, showing the machine in respective six, subsequent operative steps;
Fig. 9 is a plan view of the machine according to an alternative embodiment of the invention;
Fig. 10 is a view in longitudinal cross-section of the machine of Fig. 9;
Figs. 11 to 20 are views similar to Fig. 9, showing the machine in respective ten, subsequent operative steps.

With reference to the above Figures, a machine 10 for processing the organic fraction of urban solid waste comprises a supporting frame 12 supported on feet such as 14, 16. Frame 12 comprises two side members 18, 20 which are interconnected at their ends by cross members 22, 24. A structure 26 is arranged in front of one end of frame 12, which also is supported on feet such as 28. A horizontal, perforated tube 30 is axially sandwiched between frame 12 and structure 26 by means of tie rods 32 pulling on frame 12 and structure 26.

Perforated tube 30 has a rectangular profile and is open at both its end facing frame 12, hereinafter referred to as inlet end 30a, and its opposite end facing structure 26, hereinafter referred to as outlet end 30b.

Frame 12 supports a hopper 34 at the bottom of which a loading channel 36 is formed, which is aligned to perforated tube 30 and has the same rectangular profile. Loading channel 36 has an inlet mouth 36a and an outlet mouth 36b which is connected to inlet end 30a of perforated tube 30.

A pressing member 40 is insertable through inlet mouth 36a of channel 36, which has a rectangular profile matching with the profile of perforated tube 30, and is driven by a first hydraulic cylinder 42 supported on frame 12 for progressively entering channel 36 and perforated tube 30, as will be better described below.

Outlet end 30b of perforated tube 30 leads to a vertical duct 44 defined in structure 26, which is open at its lower end.

A shutter 49 is slidably received within duct 44 under control of a hydraulic cylinder 50 for closing outlet end 30b of the perforated tube. Shutter 49 has a sharp edge 49a which is slidable in a scraping relation along the edge of outlet end 30b of perforated tube 30.

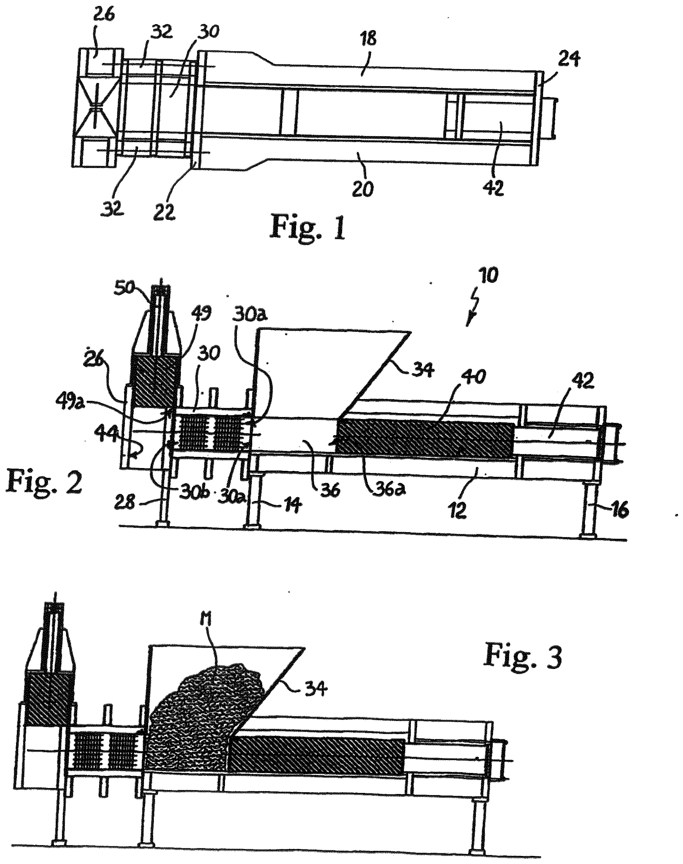

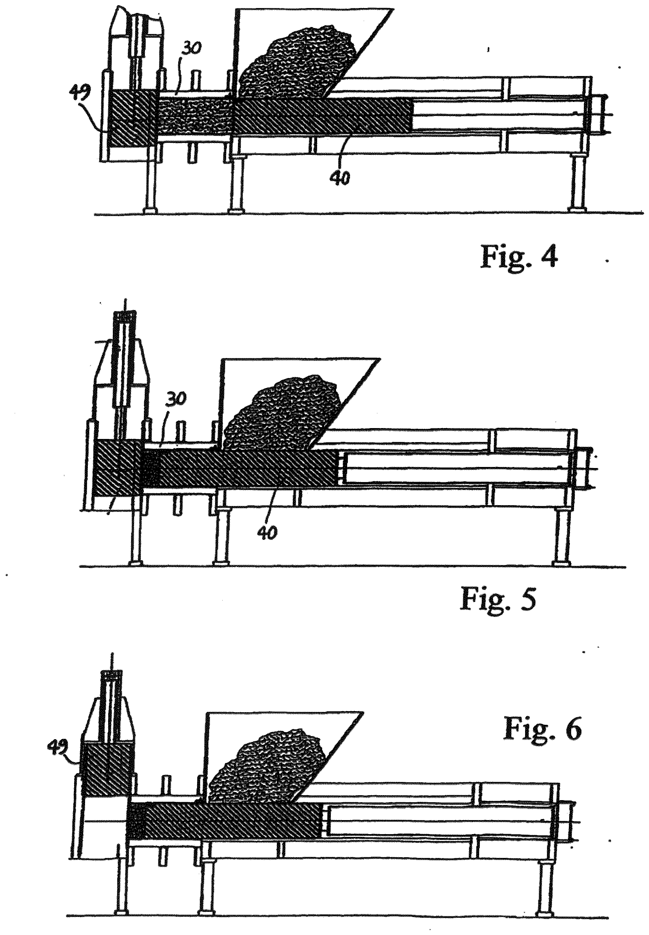

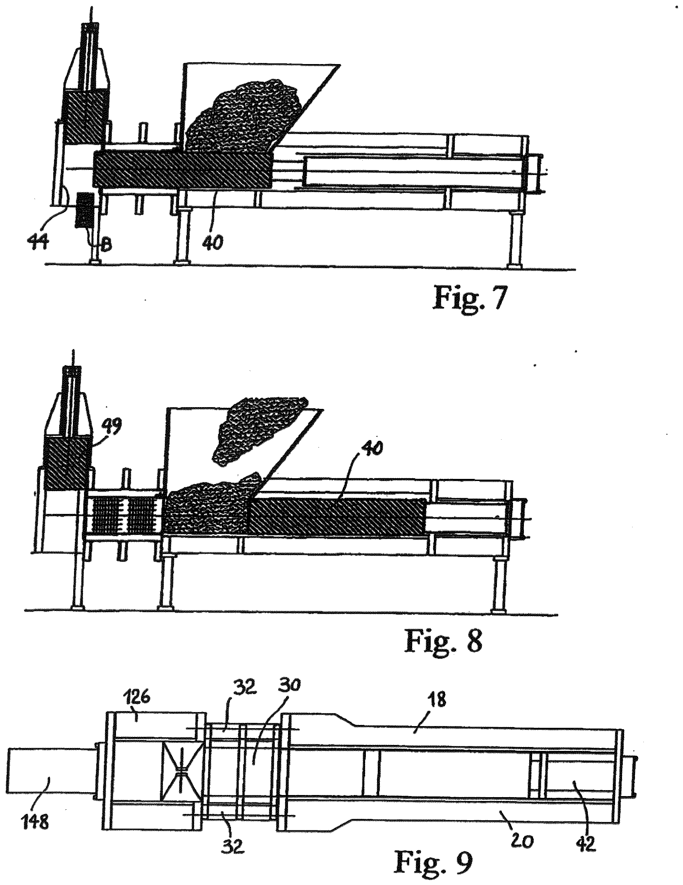

In operation, at the beginning machine 10 is configured as shown in Fig. 2, shutter 49 is lifted and pressing member 40 is withdrawn so that it does not engage channel 36 and perforated tube 30. Then, channel 36 is filled with organic material M to be processed via hopper 34 (Fig. 3). Now, shutter 49 is lowered, thereby closing outlet end 30b of perforated tube 30, and pressing member 40 is moved forward so that it enters channel 36 and pushes the material contained therein into perforated tube 30 (Fig. 4). Then, pressing member 40 is further moved forward so that it enters perforated tube 30 and squeezes the material contained therein, with drainage of the fluid fraction through the holes of the tube (Fig. 5). Now, shutter 49 is lifted (Fig. 6) in order to open outlet end 30b of perforated tube 30, and pressing member 40 is further moved forward, thereby unloading block B made of compacted, "dry" material into vertical duct 44 (Fig. 7). Now, pressing member 40 is withdrawn to the initial, resting position, so that fresh material to be compacted will drop into channel 36 (Fig. 8). In the following cycle, during the lowering of shutter 49, any residuals on the edge of outlet end 30b of perforated tube 30 will be removed by the scraping action exerted by sharp edge 49a of shutter 49.

Of course, the operation of the machine throughout the various, above-described steps can be automatized way by conventional, programmable control systems which will not be described because they fall outside the scope of the invention.

According to an alternative embodiment of the invention as shown in Figs. 9 to 20, the closing of, and the scraping action on, outlet end 30b of perforated tube 30, are performed by two separate components, rather than being both performed by a shutter. The elements unvaried with respect to the previous embodiment will be referred to by the same reference numbers, while those elements which are only similar will be referred to by the same number augmented by 100. In this embodiment, a shutting member 146 aligned to first hydraulic cylinder 42 is horizontally driven by a respective hydraulic cylinder 148, which is supported on a structure 126 arranged in front of frame 12, likewise the previous embodiment, for abutting against outlet end 30a of perforated tube 30 with its front surface.

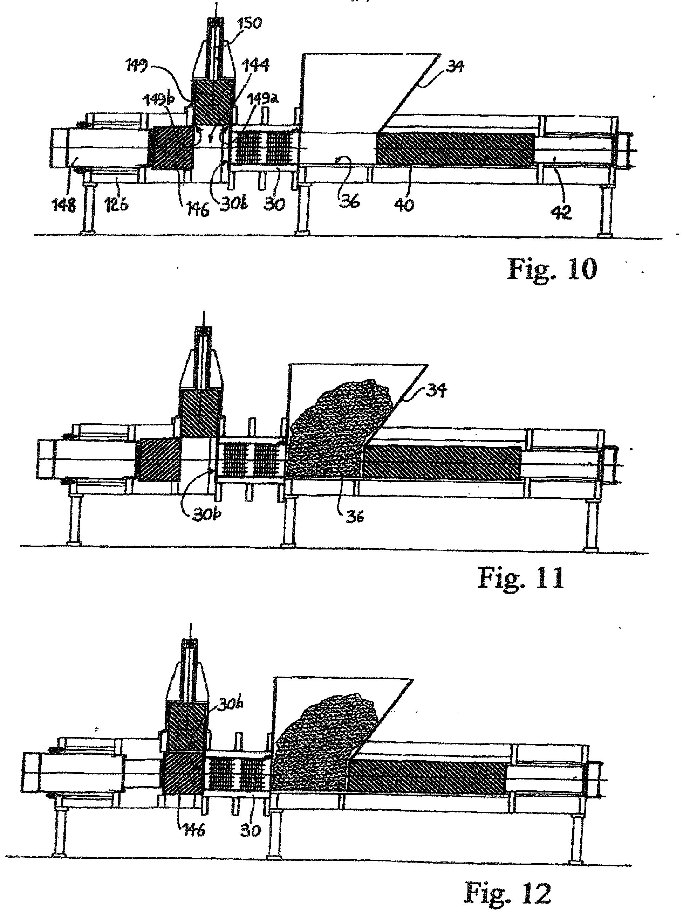

Likewise the previous embodiment, a vertical duct 144 is defined in structure 126, downstream of perforated tube. A guillotine 149 driven by a third hydraulic cylinder 150 is slidable within vertical duct 144, and has a sharp edge 149a which is slidable in a scraping relation along the edge of outlet end 30b of perforated tube 30, as well as an opposite sharp edge 149b which is also slidable in a scraping relation along the front surface of shutting member 146 at its withdrawn, resting position, i.e., at a position which is axially spaced from outlet end 30b of perforated tube 30 and does not engage vertical duct 144 (Fig. 10).

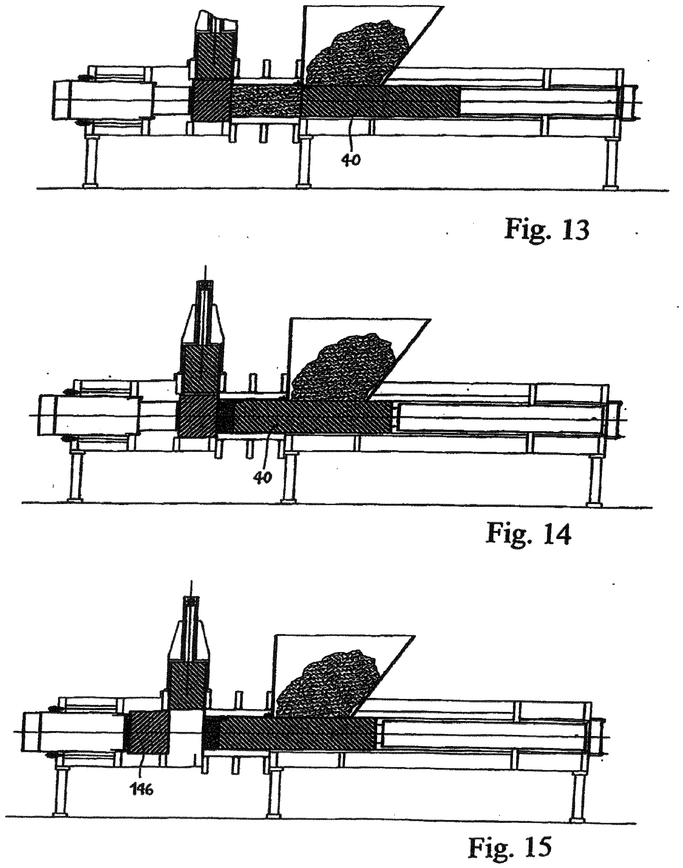

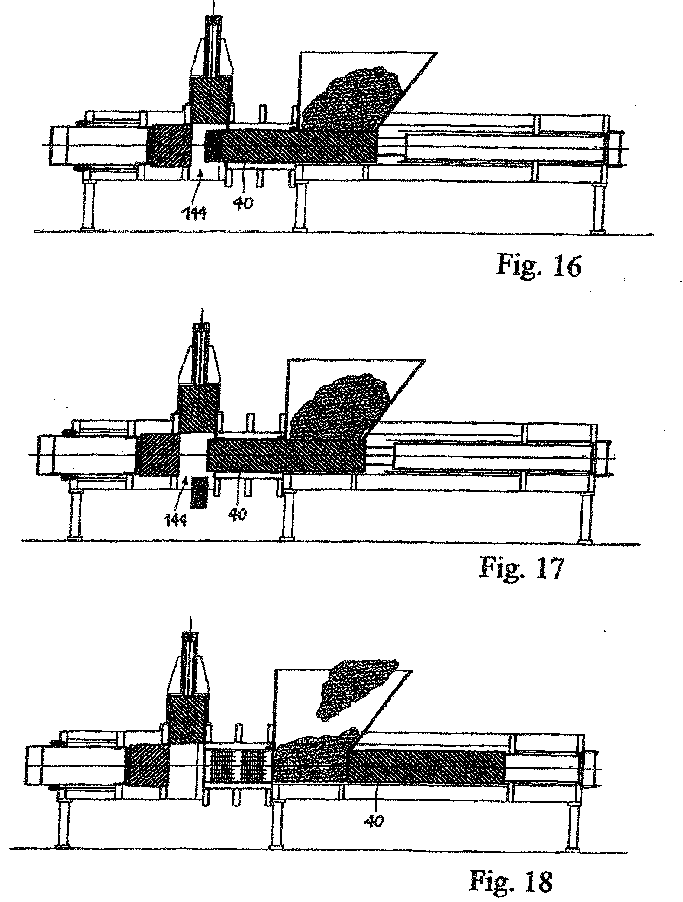

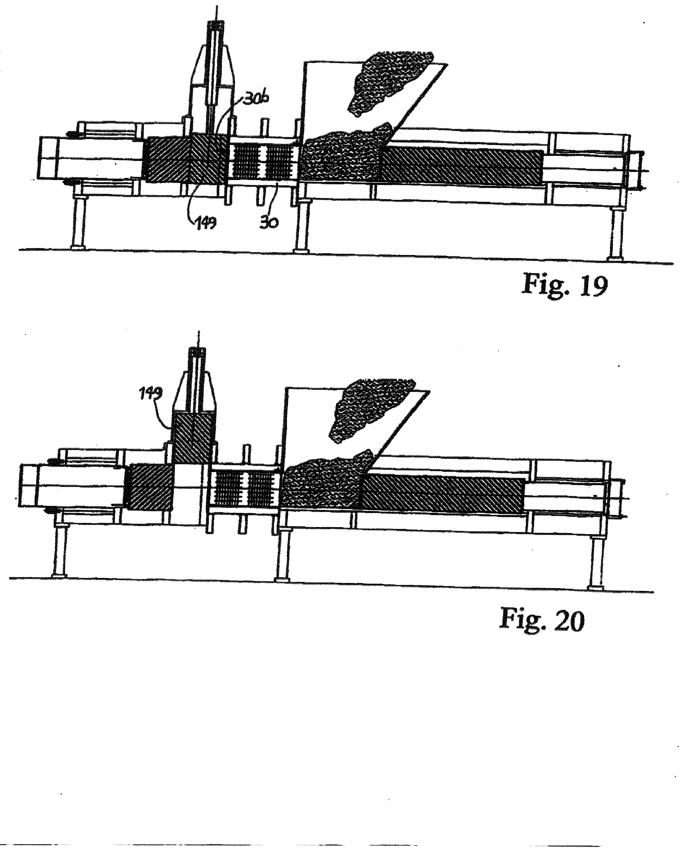

Also with this arrangement, machine 10 is initially configured as shown in Fig. 10, with all the hydraulic cylinder completely withdrawn. Likewise the previous embodiment, channel 36 is filled with organic material to be processed via hopper 34 (Fig. 11). Now, shutting member 146 is moved forward up to close outlet end 30b of perforated tube 30 (Fig. 12), and pressing member 40 is moved forward to fill the perforated tube and squeeze the material contained therein, likewise the previous embodiment (Figs. 13, 14). Now, shutting member 146 is withdrawn so that it disengages duct 144 (Fig. 15), and pressing member 40 is further moved forward to push the compacted material into duct 144 (Figs. 16, 17). Now, pressing member 40 is withdrawn to the initial, resting position, so that fresh material to be compacted will drop into channel 36 (Fig. 18). Thereafter, guillotine 149 is operated for scraping both the edge of outlet end 30b of perforated tube 30 (Fig. 19) and the surface of shutting member 146, and finally the initial configuration of the machine (Fig. 20) is restored for starting a new cycle.

A few preferred embodiments of the invention have been described herein, but of course many changes may be made by a person skilled in the art within the scope of the claims. For instance, in the above-described embodiments the various chambers, as well as the slidable elements arranged therein, generally have a rectangular profile, because the operative pressures are relatively low, due to the relative yielding nature of the material under processing, so that it is not necessary to use cylindrical profiles that, as well known to the person skilled in the art, feature a better stress distribution. However, of course it is possible to use different profiles, e.g., polygonal profiles, as well as the above-mentioned cylindrical profile.

## Claims

1. A machine (10) for processing the organic fraction of urban solid waste, comprising:
- a supporting frame (12),
- a rectilinear channel (36) which has an inlet mouth (36a) and an outlet mouth (36b) at its opposite longitudinal ends,
- a perforated, rectilinear tube (30) which is aligned with said rectilinear channel (36) and has an open inlet end (30a) connected to the outlet mouth (36b) of said horizontal channel (36), as well as an open outlet end (30b) having an edge,
- shutting means (49) operable to slide along the edge of the outlet end (30b) to close said outlet end (30b) of the perforated tube (30), wherein said shutting means (49) has a sharp edge (49a) which is slidable in a scraping relation along the edge of said outlet end (30b) of the perforated tube (30);
or shutting means (146) and a guillotine (149), wherein the shutting means (146) is operable to close said outlet end (30b) of the perforated tube (30) and wherein the guillotine (149) has a sharp edge (149a) which is slidable in a scraping relation along the edge of outlet end (30b) of the perforated tube (30); and
- a pressing member (40) which is slidably insertable through the inlet mouth (36a) of the channel, under control of a driving means (42), to enter the channel (36), in such a way as to push the material contained therein into the perforated tube (30), then the perforated tube, with said shutting means (49, 146) in a closed configuration, in such a way as to squeeze the material with drainage of its humid fraction through the holes in the perforated tube (30), and finally to continue its stroke into the perforated tube (30), with said shutting means (49, 146) in an open configuration, in such a way as to eject the squeezed material through said outlet end (30b) of the perforated tube, **characterized in that** said channel (36) and said pressing members (40) have complementary profiles; and **in that** said perforated tube (30) and said pressing member (40) have complementary profiles.

2. The machine of claim 1, **characterized in that** said loading channel (36) comprises a loading hopper (34).

3. The machine of claim 1 or 2, **characterized in that** the guillotine (149) has an sharp edge (149b) opposite to the sharp edge (149a), which is also slidable in a scraping relation along the front surface of shutting member (146) at its withdrawn, resting position.

4. The machine of any of claims 1 to 3 comprising a vertical duct (44) defined in a structure (26) at the outlet end (30b) of the perforated tube (30), wherein the shutting means (49, 146) is slidably received in the duct (44).

5. The machine of claim 4 wherein the vertical duct (44) is open at its lower end.

6. The machine of claim 5 wherein said vertical duct (44) is adapted to receive squeezed material ejected through said outlet end (30b) of the perforated tube.

7. The machine of claim 4, **characterized in that** said perforated tube (30) is axially sandwiched between said frame (12) and the structure (26) by means of tie rods (32).

8. A method for processing the organic fraction of urban solid waste, comprising the steps of:
- providing a perforated tube (30) which has an inlet end (30a) and an outlet end (30b) having an edge,
- providing a shutting means (49) operable to slide along the edge of the outlet end (30b) to close said outlet end (30b) of the perforated tube (30), wherein said shutting means (49) has a sharp edge (49a) which is slidable in a scraping relation along the edge of said outlet end (30b) of the perforated tube (30)
or providing shutting means (146) and a guillotine (149), wherein the shutting means (146) is operable to close said outlet end (30b) of the perforated tube (30) and wherein the guillotine (149) has a sharp edge (149a) which is slidable in a scraping relation along the edge of outlet end (30b) of the perforated tube (30);
- loading waste to be processed in front of the inlet end (30a) of the perforated tube (30),
- guiding a pressing member (40) into the perforated tube (30) with a rectilinear channel (36) in front of the perforated tube (30), wherein said channel (36) and said pressing members (40) have complementary profiles;
- pushing the waste with a pressing member (40) into the perforated tube (30), wherein said perforated tube (30) and said pressing member (40) have complementary profiles and
- continuing the stroke of the pressing member (40) into the perforated tube (30) while the outlet end (30b) of the perforated tube (30) is closed by the shutting means (49, 146) in such a way as to squeeze the waste with drainage of its humid fraction through the holes in the perforated tube (30), and
- continuing the stroke of the pressing member (40) further into the perforated tube (30) with said shutting means (49, 146) in an open configuration in such a way as to eject the squeezed waste through the outlet end (30b) of the perforated tube,
- scraping waste from the edge of the outlet end (30b) of the perforated tube (30) with the shutting means (49) or the guillotine (149).

9. The method of claim 8 wherein the waste is loaded through a loading hopper (34).

10. The method of claim 8 or 9 comprising guiding the pressing member (40) into the perforated tube (30) with a rectilinear channel (36) in front of the perforated tube.

11. The method of any of claims 8 to 10 comprising providing a vertical duct (44) defined in a structure (26) at the outlet end (30b) of the perforated tube (30), wherein the shutting means (49, 146) is slides in the duct (44).

12. The method of any of claims 8 to 11 wherein the vertical duct (44) is open at its lower end and comprising unloading squeezed material ejected through said outlet end (30b) of the perforated tube into the vertical duct 44.

## Patentansprüche

1. Maschine (10) zur Verarbeitung der organischen Fraktion städtischer Festabfälle, umfassend:
- einen Tragrahmen (12),
- einen geradlinigen Kanal (36) mit einer Einlassöffnung (36a) und einer Auslassöffnung (36b) an den in Längsrichtung entgegengesetzten Enden,
- ein perforiertes, geradliniges Rohr (30), das an dem geradlinigen Kanal (36) ausgerichtet ist und ein offenes Einlassende (30a) aufweist, das mit der Auslassöffnung (36b) des horizontalen Kanals (36) verbunden ist, sowie ein offenes Auslassende (30b) mit einer Kante,
- Schließmittel (49), das zum Gleiten entlang der Kante des Auslassendes (30b) betätigbar ist, um das Auslassende (30b) des perforierten Rohrs (30) zu verschließen, wobei das Schließmittel (49) eine scharfe Kante (49a) aufweist, die kratzend an der Kante des Auslassendes (30b) des perforierten Rohrs (30) entlanggleiten kann;
oder Schließmittel (146) und eine Guillotine (149), wobei das Schließmittel (146) betätigbar ist, um das Auslassende (30b) des perforierten Rohrs (30) zu verschließen, und wobei die Guillotine (149) eine scharfe Kante (149a) aufweist, die kratzend an der Kante des Auslassendes (30b) des perforierten Rohrs (30) entlanggleiten kann; und
- ein Pressteil (40), das durch die Einlassöffnung (36a) des Kanals gleitend einführbar ist, gesteuert durch ein Antriebsmittel (42), um so in den Kanal (36) einzutreten, dass das darin enthaltene Material in das perforierte Rohr (30) hineingeschoben wird, dann wird das perforierte Rohr mit dem Schließmittel (49, 146) in eine geschlossene Stellung gebracht, so dass das Material zusammengepresst wird, wobei seine feuchte Fraktion durch die Löcher in dem perforierten Rohr (30) abfließt, und schließlich wird es weiter in das perforierte Rohr (30) hineingeschoben, wobei das Schließmittel (49, 146) in offener Stellung ist, so dass das zusammengepresste Material durch das Auslassende (30b) des perforierten Rohrs hinausgedrückt wird, **dadurch gekennzeichnet, dass** der Kanal (36) und die Pressteile (40) komplementäre Profile aufweisen; und dass das perforierte Rohr (30) und das Pressteil (40) komplementäre Profile aufweisen.

2. Maschine gemäß Anspruch 1, **dadurch gekennzeichnet, dass** der Beschickungskanal (36) einen Beschickungstrichter (34) umfasst.

3. Maschine gemäß Anspruch 1 oder 2, **dadurch gekennzeichnet, dass** die Guillotine (149) gegenüber der scharfen Kante (149a) eine scharfe Kante (149b) aufweist, die gleichermaßen kratzend an der Vorderfläche des Schließteils (146) in der eingezogenen Ruhestellung entlanggleiten kann.

4. Maschine gemäß einem der Ansprüche 1 bis 3, umfassend einen vertikalen Schacht (44), der in einer Konstruktion (26) am Auslassende (30b) des perforierten Rohrs (30) definiert ist, wobei das Schließmittel (49, 146) gleitend in dem Schacht (44) aufgenommen ist.

5. Maschine gemäß Anspruch 4, wobei der vertikale Schacht (44) an seinem unteren Ende offen ist.

6. Maschine gemäß Anspruch 5, wobei der vertikale Schacht (44) dazu ausgebildet ist, das zusammengepresste Material aufzunehmen, welches durch das Auslassende (30b) des perforierten Rohrs hinausgedrückt wird.

7. Maschine gemäß Anspruch 4, **dadurch gekennzeichnet, dass** das perforierte Rohr (30) mittels Verbindungsstangen (32) axial zwischen dem Rahmen (12) und der Konstruktion (26) angeordnet ist.

8. Verfahren zur Verarbeitung der organischen Fraktion städtischer Festabfälle, umfassend folgende Schritte:
- Bereitstellen eines perforierten Rohrs (30), das ein Einlassende (30a) und ein Auslassende (30b) mit einer Kante aufweist,
- Bereitstellen eines Schließmittels (49), das zum Gleiten entlang der Kante des Auslassendes (30b) betätigbar ist, um das Auslassende (30b) des perforierten Rohrs (30) zu verschließen, wobei das Schließmittel (49) eine scharfe Kante (49a) aufweist, die kratzend an der Kante des Auslassendes (30b) des perforierten Rohrs (30) entlanggleiten kann, oder Bereitstellen eines Schließmittels (146) und einer Guillotine (149), wobei das Schließmittel (146) betätigbar ist, um das Auslassende (30b) des perforierten Rohrs (30) zu verschließen, und wobei die Guillotine (149) eine scharfe Kante (149a) aufweist, die kratzend an der Kante des Auslassendes (30b) des perforierten Rohrs (30) entlanggleiten kann;
- Einfüllen von aufzubereitendem Abfall vor dem Einlassende (30a) des perforierten Rohrs (30),
- Einführen eines Pressteils (40) in das perforierte Rohr (30) mit einem geradlinigen Kanal (36) vor dem perforierten Rohr (30), wobei der Kanal (36) und die Pressteile (40) komplementäre Profile aufweisen;
- Einschieben des Abfalls mittels eines Pressteils (40) in das perforierte Rohr (30), wobei das perforierte Rohr (30) und das Pressteil (40) komplementäre Profile aufweisen, und
- Fortsetzen des Schubes des Pressteils (40) in das perforierte Rohr (30), während das Auslassende (30b) des perforierten Rohrs (30) so durch das Schließmittel (49, 146) verschlossen wird, dass der Abfall zusammengepresst wird, wobei seine feuchte Fraktion durch die Löcher in dem perforierten Rohr (30) abfließt, und
- Weiterschieben des Pressteils (40) in das perforierte Rohr (30) hinein, wobei das Schließmittel (49, 146) in einer offenen Stellung ist, so dass der zusammengepresste Abfall durch das Auslassende (30b) des perforierten Rohrs hinausgedrückt wird,
- Abkratzen von Abfall von der Kante des Auslassendes (30b) des perforierten Rohrs (30) mittels des Schließmittels (49) oder der Guillotine (149).

9. Verfahren gemäß Anspruch 8, wobei der Abfall durch einen Beschickungstrichter (34) eingeführt wird.

10. Verfahren gemäß Anspruch 8 oder 9, umfassend Einführen des Pressteils (40) in das perforierte Rohr (30) mit einem geradlinigen Kanal (36) vor dem perforierten Rohr.

11. Verfahren gemäß einem der Ansprüche 8 bis 10, umfassend das Bereitstellen eines vertikalen Schachts (44), der in einer Konstruktion (26) am Auslassende (30b) des perforierten Rohrs (30) definiert ist, wobei das Schließmittel (49, 146) in dem Schacht (44) gleitet.

12. Verfahren gemäß einem der Ansprüche 8 bis 11, wobei der vertikale Schacht (44) an seinem unteren Ende offen ist, und umfassend Entladen von zusammengepresstem Material, welches durch das Auslassende (30b) des perforierten Rohrs in den vertikalen Schacht (44) hinausgedrückt wird.

## Revendications

1. Machine (10) de traitement de la fraction organique d'un déchet solide urbain, comprenant :
- un cadre de support (12),
- un canal rectiligne (36) qui possède une ouverture d'entrée (36a) et une ouverture de sortie (36b) à ses extrémités longitudinales opposées,
- un tube rectiligne perforé (30) qui est aligné avec ledit canal rectiligne (36) et qui possède une extrémité d'entrée ouverte (30a) connectée à l'ouverture de sortie (36b) dudit canal horizontal (36), ainsi qu'une extrémité de sortie (30b) possédant un bord,
- un moyen de fermeture (49) qui peut coulisser le long du bord de l'extrémité de sortie (30b) pour fermer ladite extrémité de sortie (30b) du tube perforé (30), ledit moyen de fermeture (49) possédant un bord tranchant (49a) qui est coulissant dans une relation de raclage le long du bord de ladite extrémité de sortie (30b) du tube perforé (30) ; ou un moyen de fermeture (146) et une guillotine (149), le moyen de fermeture (146) étant utilisable pour fermer ladite extrémité de sortie (30b) du tube perforé (30) et la guillotine (149) possédant un bord tranchant (149a) qui est coulissant dans une relation de raclage le long du bord de l'extrémité de sortie (30b) du tube perforé (30) ; et
- un élément de pression (40) qui est insérable par coulissement dans l'ouverture d'entrée (36a) du canal, sous le contrôle d'un moyen d'entraînement (42), afin d'entrer dans le canal (36) de manière à pousser la matière contenue à l'intérieur du canal dans le tube perforé (30), puis le tube perforé, avec le moyen de fermeture (49, 146) dans une position de fermeture, de manière à presser la matière en évacuant sa fraction humide par les trous du tube perforé (30), et finalement pour continuer sa course dans le tube perforé (30), avec ledit moyen de fermeture (49, 146) dans une configuration ouverte, de manière à éjecter la matière pressée par ladite extrémité de sortie (30b) du tube perforé, **caractérisée en ce que**
ledit canal (36) et ledit élément de pression (40) possèdent des profils complémentaires et **en ce que** le tube perforé (30) et ledit élément de pression (40) possèdent des profils complémentaires.

2. Machine selon la revendication 1, **caractérisée en ce que** le canal chargement (36) comprend une trémie de chargement (34).

3. Machine selon la revendication 1 ou 2, **caractérisée en ce que** la guillotine (149) possède un bord tranchant (149b) opposé au bord tranchant (149a), qui est aussi coulissant dans une relation de raclage le long de la surface avant de l'élément de fermeture (146) à son retrait, en position de repos.

4. Machine selon l'une quelconque des revendications 1 à 3 comprenant un conduit vertical (44) défini dans une structure (26) à l'extrémité de sortie (30b) du tube perforé (30), le moyen de fermeture (46, 149) étant reçu de manière coulissante dans le conduit (44).

5. Machine selon la revendication 4, dans laquelle le conduit vertical (44) est ouvert à son extrémité inférieure.

6. Machine selon la revendication 5, dans laquelle ledit tube vertical (44) est adapté à recevoir la matière pressée éjectée par l'extrémité de sortie (30b) du tube perforé.

7. Machine selon la revendication 4, **caractérisée en ce que** le tube perforé (30) est axialement coincé entre ledit cadre de support (12) et la structure (26) à l'aide de tirants (32).

8. Procédé de traitement de la fraction organique d'un déchet solide urbain, comprenant des étapes de :
- fourniture d'un tube perforé (30) qui possède une extrémité d'entrée (30a) et une extrémité de sortie (30b) possédant un bord,
- fourniture d'un moyen de fermeture (49) qui peut coulisser le long du bord de l'extrémité de sortie (30b) afin de fermer ladite extrémité de sortie (30) du tube perforé (30), ledit moyen de fermeture possédant un bord tranchant (49a) qui est coulissant dans une relation de raclage le long du bord de l'extrémité de sortie (30b) du tube perforé (30)
ou fourniture d'un moyen de fermeture (146) et d'une guillotine, ledit moyen de fermeture étant utilisable pour fermer ladite extrémité de sortie (30b) du tube perforé (30) et la guillotine (149) possédant un bord tranchant (149a) qui est coulissant dans une relation de raclage le long du bord de l'extrémité de sortie (30b) du tube perforé (30) ;
- de chargement d'un déchet pour être traité devant l'extrémité d'entrée (30a) du tube perforé (30),
- de guidage d'un élément de pression (40) dans le tube perforé (30) avec un canal rectiligne (36) devant le tube perforé (30), ledit canal (36) et ledit élément de pression (40) possédant des profils complémentaires ;
- de poussée du déchet avec un élément de pression (40) dans le tube perforé (30), ledit tube perforé (30) et ledit élément de pression (40) possédant des profils complémentaires et
- de poursuite de la course de l'élément de pression (40) dans le tube perforé (30) pendant que l'extrémité de sortie (30b) du tube perforé (30) est fermée par le moyen de fermeture (49, 146) de façon à presser le déchet en évacuant sa fraction humide par les trous dans le tube perforé (30), et
- de poursuite de la course de l'élément de pression (40) plus loin dans le tube perforé (30) avec le moyen de fermeture (49, 146) dans une configuration ouverte de façon à éjecter le déchet pressé par l'extrémité de sortie (30b) du tube perforé,
- de raclage du déchet à partir du bord de l'extrémité de sortie (30b) du tube perforé (30) avec le moyen de fermeture (49) ou la guillotine (149).

9. Procédé selon la revendication 8 dans lequel le déchet est chargé par une trémie de chargement (34).

10. Procédé selon la revendication 8 ou 9 comprenant une étape de guidage de l'élément de pression (40) dans le tube perforé (30) avec un canal rectiligne (36) devant le tube perforé.

11. Procédé selon l'une quelconque des revendications 8 à 10 comprenant une étape de fourniture d'un conduit rectiligne (44) défini dans une structure (26) à l'extrémité de sortie (30b) du tube perforé (30), le moyen de fermeture (49, 146) étant coulissant dans le conduit (44).

12. Procédé selon l'une quelconque des revendications 8 à 11 dans lequel le conduit vertical (44) est ouvert à son extrémité inférieure et comprend une étape de déchargement de la matière pressée éjectée par ladite extrémité de sortie (30b) du tube perforé dans le conduit vertical (44).
